# EUROPEAN PATENT SPECIFICATION

(11) **EP 1 394 815 B1**
(45) Date of publication and mention of the grant of the patent: **22.06.2011**
(21) Application number: 03255276.2
(22) Date of filing: 26.08.2003
(51) Int. Cl.: G21K 1/06

(54) **Lithographic apparatus comprising a Mo/Si-multilayer with capping layer**
Lithographiegerät mit einem Mo/Si Mehrfachschichtenspiegel mit einer Schutzschicht
Appareil de lithographie comprenant une multicouche Mo/Si couvert par une couche protectrice

(30) Priority: 28.08.2002 EP 02255961
(43) Date of publication of application: 03.03.2004
(73) Proprietor: ASML Netherlands B.V., 5504 DR Veldhoven (NL); Carl Zeiss SMT GmbH, 73447 Oberkochen (DE)
(72) Inventor: Kurt, Ralph, 5655 CG Eindhoven (NL); Yakshin, Andrei E. L., 3432 BD Nieuwegein (NL)
(74) Representative: Slenders, Petrus J. W.

(56) References cited:
- EP-A- 1 065 568
- EP-A- 1 150 139
- SINGH M ET AL: "Capping layers for extreme-ultraviolet multilayer interference coatings" OPTICS LETTERS, OPT. SOC. AMERICA, USA, vol. 26, no. 5, 1 March 2001 (2001-03-01), pages 259-261, XP002219427 ISSN: 0146-9592
- LARRUQUERT J I: "Sub-quarterwave multilayers with enhanced reflectance at 13.4 and 11.3 nm" OPTICS COMMUNICATIONS, NORTH-HOLLAND PUBLISHING CO. AMSTERDAM, NL, vol. 206, no. 4-6, 1 June 2002 (2002-06-01), pages 259-273, XP004360973 ISSN: 0030-4018
- DATABASE INSPEC [Online] THE INSTITUTION OF ELECTRICAL ENGINEERS, STEVENAGE, GB; 2001, BAJT S ET AL: "Improved reflectance and stability of Mo/Si multilayers" XP002219428 Database accession no. 7309833

## Description

The present invention relates to a lithographic projection apparatus comprising:
- a radiation system for supplying a projection beam of radiation;
- a support structure for supporting patterning means, the patterning means serving to pattern the projection beam according to a desired pattern;
- a substrate table for holding a substrate;
- a projection system for projecting the patterned beam onto a target portion of the substrate; and
- at least one optical element on which said projection beam is incident having a Si/Mo multilayer structure, an outer capping layer and an interlayer positioned between said multilayer structure and said outer capping layer, wherein the outer capping layer is comprised of (i) C or Mo or (ii) an inner interlayer of Mo next to said multiplayer structure and an outer interlayer of C next to said capping layer.

The term "patterning means" as here employed should be broadly interpreted as referring to means that can be used to endow an incoming radiation beam with a patterned cross-section, corresponding to a pattern that is to be created in a target portion of the substrate; the term "light valve" can also be used in this context. Generally, the said pattern will correspond to a particular functional layer in a device being created in the target portion, such as an integrated circuit or other device (see below). Examples of such patterning means include:
- A mask. The concept of a mask is well known in lithography, and it includes mask types such as binary, alternating phase-shift, and attenuated phase-shift, as well as various hybrid mask types. Placement of such a mask in the radiation beam causes selective transmission (in the case of a transmissive mask) or reflection (in the case of a reflective mask) of the radiation impinging on the mask, according to the pattern on the mask. In the case of a mask, the support structure will generally be a mask table, which ensures that the mask can be held at a desired position in the incoming radiation beam, and that it can be moved relative to the beam if so desired.
- A programmable mirror array. One example of such a device is a matrix-addressable surface having a viscoelastic control layer and a reflective surface. The basic principle behind such an apparatus is that (for example) addressed areas of the reflective surface reflect incident light as diffracted light, whereas unaddressed areas reflect incident light as undiffracted light. Using an appropriate filter, the said undiffracted light can be filtered out of the reflected beam, leaving only the diffracted light behind; in this manner, the beam becomes patterned according to the addressing pattern of the matrix-addressable surface. An alternative embodiment of a programmable mirror array employs a matrix arrangement of tiny mirrors, each of which can be individually tilted about an axis by applying a suitable localized electric field, or by employing piezoelectric actuation means. Once again, the mirrors are matrix-addressable, such that addressed mirrors will reflect an incoming radiation beam in a different direction to unaddressed mirrors; in this manner, the reflected beam is patterned according to the addressing pattern of the matrix-addressable mirrors. The required matrix addressing can be performed using suitable electronic means. In both of the situations described hereabove, the patterning means can comprise one or more programmable mirror arrays. More information on mirror arrays as here referred to can be gleaned, for example, from United States Patents US 5,296,891 and US 5,523,193, and PCT patent applications WO 98/38597 and WO 98/33096, which are incorporated herein by reference. In the case of a programmable mirror array, the said support structure may be embodied as a frame or table, for example, which may be fixed or movable as required.
- A programmable LCD array. An example of such a construction is given in United States Patent US 5,229,872, which is incorporated herein by reference. As above, the support structure in this case may be embodied as a frame or table, for example, which may be fixed or movable as required.

For purposes of simplicity, the rest of this text may, at certain locations, specifically direct itself to examples involving a mask and mask table; however, the general principles discussed in such instances should be seen in the broader context of the patterning means as hereabove set forth.

Lithographic projection apparatus can be used, for example, in the manufacture of integrated circuits (ICs). In such a case, the patterning means may generate a circuit pattern corresponding to an individual layer of the IC, and this pattern can be imaged onto a target portion (*e.g.* comprising one or more dies) on a substrate (silicon wafer) that has been coated with a layer of radiation-sensitive material (resist). In general, a single wafer will contain a whole network of adjacent target portions that are successively irradiated via the projection system, one at a time. In current apparatus, employing patterning by a mask on a mask table, a distinction can be made between two different types of machine. In one type of lithographic projection apparatus, each target portion is irradiated by exposing the entire mask pattern onto the target portion in one go; such an apparatus is commonly referred to as a wafer stepper. In an alternative apparatus-commonly referred to as a step-and-scan apparatus - each target portion is irradiated by progressively scanning the mask pattern under the projection beam in a given reference direction (the "scanning" direction) while synchronously scanning the substrate table parallel or anti-parallel to this direction; since, in general, the projection system will have a magnification factor M (generally < 1), the speed V at which the substrate table is scanned will be a factor M times that at which the mask table is scanned. More information with regard to lithographic devices as here described can be gleaned, for example, from US 6,046,792, incorporated herein by reference.

In a manufacturing process using a lithographic projection apparatus, a pattern (e.g. in a mask) is imaged onto a substrate that is at least partially covered by a layer of radiation-sensitive material (resist). Prior to this imaging step, the substrate may undergo various procedures, such as priming, resist coating and a soft bake. After exposure, the substrate may be subjected to other procedures, such as a post-exposure bake (PEB), development, a hard bake and measurement/inspection of the imaged features. This array of procedures is used as a basis to pattern an individual layer of a device, e.g. an IC. Such a patterned layer may then undergo various processes such as etching, ion-implantation (doping), metallization, oxidation, chemo-mechanical polishing, etc., all intended to finish off an individual layer. If several layers are required, then the whole procedure, or a variant thereof, will have to be repeated for each new layer. Eventually, an array of devices will be present on the substrate (wafer). These devices are then separated from one another by a technique such as dicing or sawing, whence the individual devices can be mounted on a carrier, connected to pins, etc. Further information regarding such processes can be obtained, for example, from the book "Microchip Fabrication: A Practical Guide to Semiconductor Processing", Third Edition, by Peter van Zant, McGraw Hill Publishing Co., 1997, ISBN 0-07-067250-4, incorporated herein by reference.

For the sake of simplicity, the projection system may hereinafter be referred to as the "lens"; however, this term should be broadly interpreted as encompassing various types of projection system, including refractive optics, reflective optics, and catadioptric systems, for example. The radiation system may also include components operating according to any of these design types for directing, shaping or controlling the projection beam of radiation, and such components may also be referred to below, collectively or singularly, as a "lens". Further, the lithographic apparatus may be of a type having two or more substrate tables (and/or two or more mask tables). In such "multiple stage" devices the additional tables may be used in parallel, or preparatory steps may be carried out on one or more tables while one or more other tables are being used for exposures. Dual stage lithographic apparatus are described, for example, in US 5,969,441 and WO 98/40791, incorporated herein by reference.

Optical elements for use in extreme ultraviolet (EUV) spectral region, e.g. multilayered thin film reflectors, are especially sensitive to physical and chemical damage which can significantly reduce their reflectivity and optical quality. For example, an unprotected optical element with a Mo/Si multilayer structure is quickly oxidized during EUV radiation in the presence of 10⁻⁶ mbar water, as is to be expected in an unbaked vacuum such as those anticipated for EUV scanners.

Reflectivities of such multilayer optical elements at EUV wavelengths are already low compared to reflectors at longer wavelengths which is a particular problem because a typical EUV lithographic system may have up to 11 mirrors; four in the illumination optics, six in the imaging optics plus the reflecting reticle. There may also be a number of grazing incidence mirrors. It is therefore evident that even a "small" decrease in the reflectivity of a single mirror due to oxidation can cause a significant light-through put reduction in the optical system.

The problem of oxidization of outer layers of multilayer thin film reflectors has already been addressed in EP 1,065,568. The problem was tackled by using a relatively inert material, which is resistant to oxidation, as a capping layer on the outer surface of the multilayer structure. In some embodiments, the Si/Mo multilayer structure is covered with other layers before the capping layer to reduce the likelihood of incomplete coverage because of the necessary multiple layer deposition. This multiple layer capping layer has been found to have good short term oxidation resistance.

It is an object of the present invention to provide an optical element which has acceptable reflectivity whilst exhibiting improved resistance to oxidation over the long term.

This and other objects are achieved according to the invention in a lithographic apparatus as specified in the opening paragraph, in option (i) characterized in that said interlayer has a thickness of between 6.0 and 9.0 nm and, in option (ii) wherein the outer capping layer is of Ru and characterized in that said outer interlayer of C has a thickness of above 3.7 nm or said capping layer has a thickness above 2.2 nm.

The advantage of such a thick interlayer is that the resistance to chemical attack, and in particular oxidation of the optical element, is increased over the thinner interlayer thicknesses of between 1 and 2 nm previously used. Surprisingly this increase in oxidation resistance is not accompanied by a significant decrease in reflectivity which would be disadvantageous. The thickness of interlayer of the present invention lies in the region of a second peak of reflectivity which was previously not known to exist. The presence of the interlayer itself ensures that the capping layer material does not intermix with the outer layer of the multilayer structure (the outer layer of which is usually Si).

According to a further aspect of the invention there is provided a device manufacturing method comprising the steps of: providing a substrate that is at least partially covered by a layer of radiation-sensitive material; providing a projection beam of radiation using a radiation system; using patterning means to endow the projection beam with a pattern in its cross-section; projecting the patterned beam of radiation onto a target portion of the layer of radiation-sensitive material using at least one optical element on which said projection beam is incident, which at least one optical element has a Si/Mo multilayer structure, an outer capping layer of Ru and an interlayer comprised of C or Mo positioned between said multilayer structure and said outer capping layer, characterized in that said interlayer has a thickness of between 6.0 and 9.0 nm or wherein said interlayer comprises an inner interlayer of Mo next to said multilayer structure and an outer interlayer of C next to said capping layer, characterized in the said outer layer of C has a thickness of about 3.7 nm or said capping layer has a thickness above 2.2 nm.

Although specific reference may be made in this text to the use of the apparatus according to the invention in the manufacture of ICs, it should be explicitly understood that such an apparatus has many other possible applications. For example, it may be employed in the manufacture of integrated optical systems, guidance and detection patterns for magnetic domain memories, liquid-crystal display panels, thin-film magnetic heads, etc. The skilled artisan will appreciate that, in the context of such alternative applications, any use of the terms "reticle", "wafer" or "die" in this text should be considered as being replaced by the more general terms "mask", "substrate"and "target portion", respectively.

In the present document, the terms "radiation"and "beam"are used to encompass all types of electromagnetic radiation, including ultraviolet radiation (e.g, with a wavelength of 365, 248, 193, 157 or 126 nm) and EUV (extreme ultra-violet radiation, e.g. having a wavelength in the range 5-20 nm, particularly 13.5 nm), as well as particle beams, such as ion beams or electron beams.

Embodiments of the invention will now be described, by way of example only, with reference to the accompanying schematic drawings in which:
Figure 1 depicts a lithographic projection apparatus according to an embodiment of the invention;
Figure 2 is a contour map of reflectivity as a function of Mo interlayer thickness vs Ru capping layer thickness for an optical element of the first embodiment of the present invention;
Figure 3 is a contour map of reflectivity as a function of C interlayer thickness vs Ru capping layer thickness for an optical element according to the second embodiment of the present invention; and
Figure 4 is a contour map of reflectivity as a function of C outer interlayer thickness vs Ru capping layer thickness for an optical element according to the fourth embodiment of the present invention.

In the Figures, corresponding reference symbols indicate corresponding parts.

### Embodiment 1

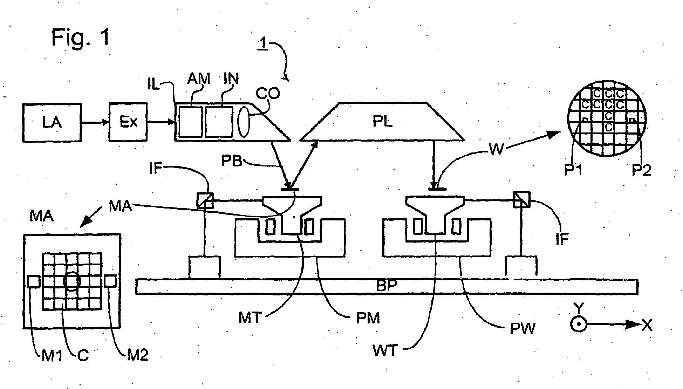

Figure 1 schematically depicts a lithographic projection apparatus according to a particular embodiment of the invention. The apparatus comprises:
· a radiation system Ex, IL, for supplying a projection beam PB of radiation (*e.g.* EUV radiation), which in this particular case also comprises a radiation source LA;
· a first object table (mask table) MT provided with a mask holder for holding a mask MA (*e.g.* a reticle), and connected to first positioning means for accurately positioning the mask with respect to item PL;
· a second object table (substrate table) WT provided with a substrate holder for holding a substrate W (*e.g*. a resist-coated silicon wafer), and connected to second positioning means for accurately positioning the substrate with respect to item PL;
· a projection system ("lens") PL (*e.g.* a mirror group) for imaging an irradiated portion of the mask MA onto a target portion C (*e.g.* comprising one or more dies) of the substrate W.
As here depicted, the apparatus is of a reflective type (*e.g.* has a reflective mask).
However, in general, it may also be of a transmissive type, for example (*e.g.* with a transmissive mask). Alternatively, the apparatus may employ another kind of patterning means, such as a programmable mirror array of a type as referred to above.

The source LA (*e.g.* a laser-produced or discharge plasma source) produces a beam of radiation. This beam is fed into an illumination system (illuminator) IL, either directly or after having traversed conditioning means, such as a beam expander Ex, for example. The illuminator IL may comprise adjusting means AM for setting the outer and/or inner radial extent (commonly referred to as σ-outer and σ-inner, respectively) of the intensity distribution in the beam. In addition, it will generally comprise various other components, such as an integrator IN and a condenser CO. In this way, the beam PB impinging on the mask MA has a desired uniformity and intensity distribution in its cross-section.

It should be noted with regard to Figure 1 that the source LA may be within the housing of the lithographic projection apparatus (as is often the case when the source LA is a mercury lamp, for example), but that it may also be remote from the lithographic projection apparatus, the radiation beam which it produces being led into the apparatus (*e.g.* with the aid of suitable directing mirrors); this latter scenario is often the case when the source LA is an excimer laser. The current invention and Claims encompass both of these scenarios.

The beam PB subsequently intercepts the mask MA, which is held on a mask table MT. Having been selectively reflected by the mask MA, the beam PB passes through the lens PL, which focuses the beam PB onto a target portion C of the substrate W. With the aid of the second positioning means (and interferometric measuring means IF), the substrate table WT can be moved accurately, *e.g.* so as to position different target portions C in the path of the beam PB. Similarly, the first positioning means can be used to accurately position the mask MA with respect to the path of the beam PB, *e.g.* after mechanical retrieval of the mask MA from a mask library, or during a scan. In general, movement of the object tables MT, WT will be realized with the aid of a long-stroke module (course positioning) and a short-stroke module (fine positioning), which are not explicitly depicted in Figure 1. However, in the case of a wafer stepper (as opposed to a step-and-scan apparatus) the mask table MT may just be connected to a short stroke actuator, or may be fixed.

The depicted apparatus can be used in two different modes:
1. In step mode, the mask table MT is kept essentially stationary, and an entire mask image is projected in one go (*i.e.* a single "flash") onto a target portion C. The substrate table WT is then shifted in the x and/or y directions so that a different target portion C can be irradiated by the beam PB;
2. In scan mode, essentially the same scenario applies, except that a given target portion C is not exposed in a single "flash". Instead, the mask table MT is movable in a given direction (the so-called "scan direction", *e.g.* the y direction) with a speed v, so that the projection beam PB is caused to scan over a mask image; concurrently, the substrate table WT is simultaneously moved in the same or opposite direction at a speed *V* = *Mv,* in which *M* is the magnification of the lens PL (typically, *M* = 1/4 or 1/5). In this manner, a relatively large target portion C can be exposed, without having to compromise on resolution.

The examples of the invention described below are obtained from computations performed using a thin film design program based on standard optical principles. The optical constants of the various materials, namely the complex refractive index *N*= *n - ik* are derived from atomic scattering factors by Henke et. al. and were obtained from the CXRO web server at Berkeley (B. L. Henke, E. M. Gullikson, and J. C. Davis, Atomic Data and Nuclear Data Tables, 54(2), 181-342 (1993); http://www.cxro.lbl.gov/optical_constants/). The calculations were performed at 13.5 nm and the values of *n* and *k* for the materials used were downloaded as functions of wavelength at 13.5 nm.

The results of the simulations calculating the theoretical reflectivity of various optical elements are performed using a projection beam wavelength of 13.5 nm but not taking account of surface roughness or interfacial diffusion. The invention is suitable for other wavelengths, especially in the EUV range of from 6 nm to 42 nm.

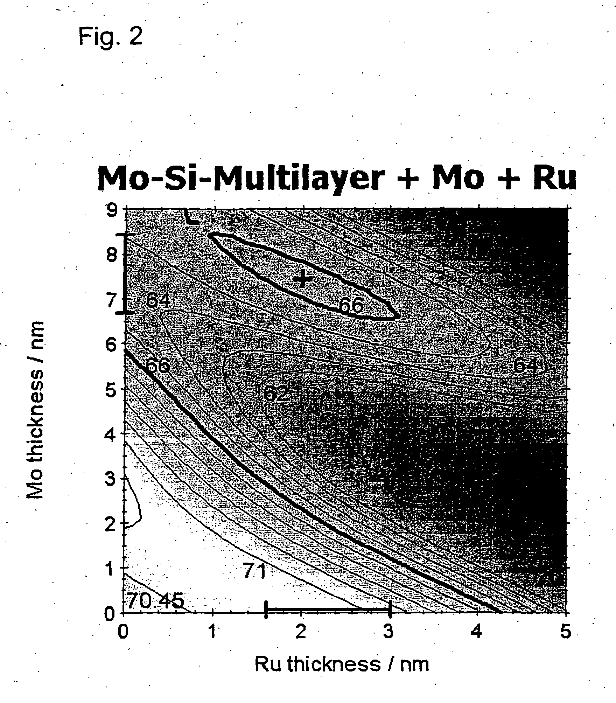

Figure 2 shows the results of simulations calculating the theoretical reflectivity of a normal incidence optical element which has a multilayer structure comprising 40 periods of Si/Mo layers grown on a Si substrate. In practice Zerodur (TM) or other low coefficient of thermal expansion materials such as ULE (TM) are used as the substrate and 40 to 50 periods of Si/Mo are used. In the example given the Si layers are 3.36 nm thick and the Mo layers are 3.66 nm thick though other thicknesses may be used. Placed on the outer side of the optical element i.e. on the other side of the multilayer structure to the substrate is a capping layer comprised of Ru. The capping layer of Ru is intended to prevent oxidation of the multilayer structure over long time periods. In order to avoid intermixing of the Ru and the outer layer of Si of the multilayer structure, an interlayer of Mo is positioned between the multilayer structure and the capping layer.

It is desired to maintain the high reflectivity of the optical element and so previously only thin interlayers have been used. It was thought that the trend in reduction in reflectivity with increase in thickness of Mo interlayer observed at thicknesses in the range of 1.0 to 2.5 nm continued at higher thicknesses. However, referring to Figure 2, it can be seen that a second peak in the reflectivity occurs for Mo interlayer thicknesses between 6.0 to 9.0 nm.

Although the reflectivity at such thicknesses of interlayer is lower than that for thinner innerlayers, this reduction in reflectivity can be tolerated because of the improvements in oxidation resistance which are achieved by a provision of a Mo interlayer of such a thickness.

As can be seen from Figure 2, the peak reflectivity occurs for a capping layer comprised of Ru of a thickness between 1.0 to 3.0 nm, in particular 1.6 to 3.0 nm and (in particular for lower thicknesses of interlayer) between 2.0 and 3.0 nm. The best reflectivities are given for an interlayer of Mo of between 6.8 and 8.5 nm and even better reflectivities are experienced with layers of between 7.2 and 8.0 nm.

### Embodiment 2

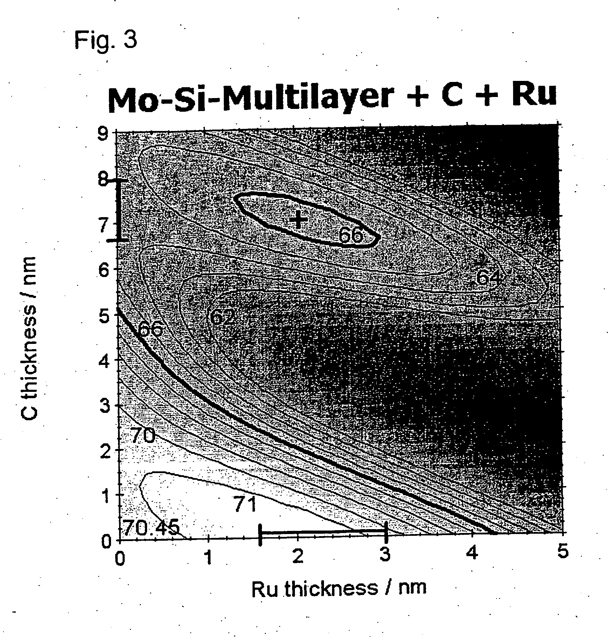

Figure 3 shows the results of simulations calculating the theoretical reflectivity of a normal incidence optical element according to the second embodiment. The optical element of the second embodiment has the same structure as that of the first embodiment except that the interlayer is comprised of C instead of being comprised of Mo.

As with the first embodiment, a second peak in reflectivity is apparent from Figure 3 in the case where the interlayer has a thickness of between 6.0 and 9.0 nm. The highest reflectivity is seen between 6.5 and 8.2 nm and more particularly between 7.0 and 7.8 nm. For the capping layer of Ru, the best reflectivity is seen between 1.6 and 3.0 nm. For the larger thickness of interlayer a lower thickness of capping layer is desirable, for example as low as 1.0 nm. For lower thickness of interlayer comprised of C a larger thickness of Ru capping layer is desirable up to about 3.0 nm. Preferably the Ru capping layer has a thickness of between 1.6 and 3.0 nm more preferably at least 2.0 nm.

### Embodiment 3

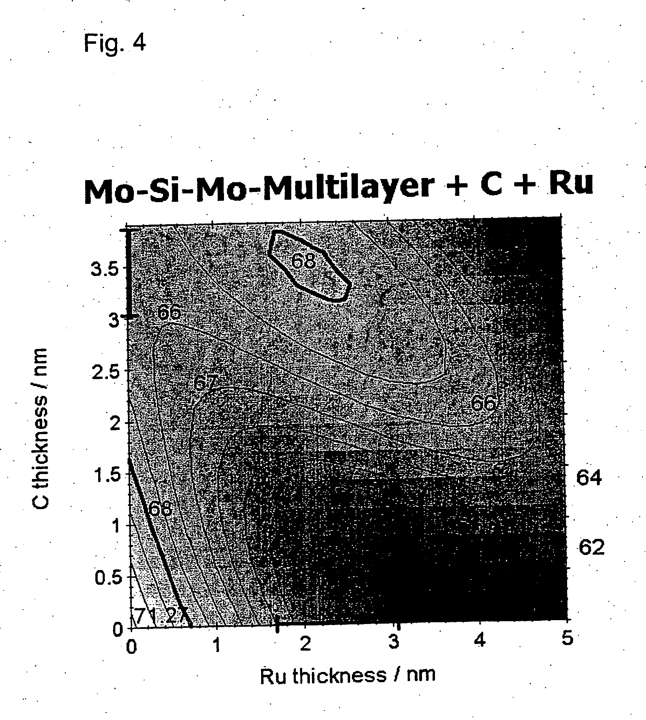

Figure 4 shows the results of simulations calculating the theoretical reflectivity of a normal incidence optical element according to the third embodiment of the present invention. The structure of the optical element of the third embodiment of the present invention is the same as that of the first embodiment of the present invention except that the interlayer is comprised of an inner layer of Mo which is positioned next to the multilayer structure and an outer layer of C which is positioned next to the Ru capping layer. The results of the simulations in figure 4 are for an inner interlayer thickness of Mo of 3.36 nm.

The results in Figure 4 show a second peak of reflectivity in the same way that the results in Figures 2 and 3 also show a second peak in reflectivity. The second peak in reflectivity in the third embodiment occurs with an outer interlayer of C with a thickness of between 3.0 to 4.0 nm for capping layer comprised of Ru with a thickness of above about 2.0 nm, more preferably 2.2 and most preferably above about 2.4 nm. For a capping layer comprised of Ru with a thickness of between 1.6 and 3.0 the best reflectivity is achieved with an outer intermediate layer of C of at least 3.4 nm, preferably above about 3.5 nm and most preferably above about 3.7 nm.

As can be seen from the examples, the second peak in reflectivity occurs when the interlayer thickness i.e. the thickness of those layers positioned between the outermost Si layer in the Si/Mo multilayer structure and the outer capping layer is about half the wavelength of the incident radiation, say between 0.3 and 0.7 or between 0.4 and 0.6, preferably between 0.45 and 0.55 times the wavelength of the incident radiation.

Although only Mo-C, C and Mo interlayers have been given as examples, the invention is not limited to these when the interlayer has a thickness between 6.0 and 9.0 nm. The interlayer may be comprised of such materials as Mo-C, C, Mo, B₄C, Mo₂C, Mo(Cr), B₄C-C-B₄C when the interlayer has a thickness between 6.0 and 9.0 nm.

The outer capping layer maybe comprised of such materials as Ru, Rh, B, SiO₂, Pd, Si₃N₄, SiC, BN, B₄C, BeO, B₄C.

Another advantage of the present invention is that the thickness of the capping layer is not critical and so less control is required when applying that capping layer.

Whilst specific embodiments of the invention have been described above, it will be appreciated that the invention may be practiced otherwise than as described. The description is not intended to limit the invention.

## Claims

1. A lithographic projection apparatus comprising:
- a radiation system for providing a projection beam of radiation;
- a support structure for supporting patterning means, the patterning means serving to pattern the projection beam according to a desired pattern;
- a substrate table for holding a substrate;
- a projection system for projecting the patterned beam onto a target portion of the substrate; and
at least one optical element on which said projection beam is incident having a Si/Mo multilayer structure, an outer capping layer and an interlayer comprised of C or Mo positioned between said multilayer structure and said outer capping layer,
**characterized in that** said interlayer has a thickness of between 6.0 and 9.0 nm.

2. A lithographic projection apparatus according to claim 1, wherein said interlayer thickness is between 6.5 and 8.5 nm, more preferably between 7.0 and 8.0 nm.

3. A lithographic projection apparatus according to claim 1, wherein said interlayer is comprised of Mo with a thickness of between 6.8 and 8.5 nm, more preferably between 7.2 and 8.0 nm.

4. A lithographic projection apparatus according to claim 1, wherein said interlayer is comprised of C with a thickness of between 6.5 and 8.2 nm, more preferably between 7.0 and 7.8 nm.

5. A lithographic projection apparatus according to any one of the preceding claims, wherein said capping layer is comprised of Ru and has a thickness of between 1.0 and 3.0 nm, preferably between 1.6 and 3.0 nm, more preferably at least 2.0 nm or 2.2 nm.

6. A lithographic projection apparatus comprising:
a radiation system for providing a projection beam of radiation;
a support structure for supporting patterning means, the patterning means serving to pattern the projection beam according to a desired pattern;
a substrate table for holding a substrate;
a projection system for projecting the patterned beam onto a target portion of the substrate; and
at least one optical element on which said projection beam is incident having a Si/Mo multilayer structure, an outer capping layer of Ru and an interlayer positioned between said multilayer structure and said outer capping layer, wherein said interlayer comprises an inner interlayer of Mo next to said multilayer structure and an outer interlayer of C next to said capping layer,
**characterized in that** said outer interlayer of C has a thickness of above 3.7 nm or said capping layer has a thickness above 2.2 nm.

7. A lithographic projection apparatus according to claim 6, wherein in the combined thickness of said Mo and C layers is between 6.0 and 9.0 nm.

8. A lithographic apparatus according to claim 6 or 7, wherein said layer of C has a thickness of below 3.8 nm.

9. A lithographic projection apparatus according to any one of claims 6 to 8, wherein said layer of Mo has a thickness of between 3.0 and 4.0 nm, preferably below 3.75 nm.

10. A device manufacturing method comprising the steps of:
providing a substrate that is at least partially covered by a layer of radiation-sensitive material;
providing a projection beam of radiation using a radiation system;
using patterning means to endow the projection beam with a pattern in its cross-section;
projecting the patterned beam of radiation onto a target portion of the layer of radiation-sensitive material using at least one optical element on which said projection beam is incident, which said at least one optical element has a Si/Mo multilayer structure, an outer capping layer and an interlayer comprised of C or Mo positioned between said multilayer structure and said outer capping layer,
**characterized in that** said interlayer has a thickness of between 6.0 and 9.0 nm.

11. A device manufacturing method comprising the steps of:
providing a substrate that is at least partially covered by a layer of radiation-sensitive material;
providing a projection beam of radiation using a radiation system;
using patterning means to endow the projection beam with a pattern in its cross-section;
projecting the patterned beam of radiation onto a target portion of the layer of radiation-sensitive material using at least one optical element on which said projection beam is incident, which said at least one optical element has a Si/Mo multilayer structure, an outer capping layer of Ru and an interlayer positioned between said multilayer structure and said outer capping layer,
wherein said interlayer comprises an inner interlayer of Mo next to said multilayer structure and an outer interlayer of C next to said capping layer,
**characterized in that** said outer interlayer of C has a thickness of above 3.7 nm or said capping layer has a thickness above 2.2 nm.

## Patentansprüche

1. Ein lithographisches Projektionsgerät, das Folgendes beinhaltet:
- ein Strahlungssystem zum Bereitstellen eines Projektionsstrahls aus Strahlung;
- eine Stützstruktur zum Stützen eines Musteraufbringungsmittels, wobei das Musteraufbringungsmittel dazu dient, den Projektionsstrahl gemäß einem gewünschten Muster zu mustern;
- einen Substrattisch zum Halten eines Substrats;
- ein Projektionssystem zum Projizieren des gemusterten Strahls auf einen Zielabschnitt des Substrats und
mindestens ein optisches Element, auf das der Projektionsstrahl einfällt, mit einer Si/Mo-Mehrfachschichtstruktur, einer äußeren Deckschicht und einer aus C oder Mo bestehenden Zwischenschicht, die zwischen der Mehrfachschichtstruktur und der äußeren Deckschicht positioniert ist,
**dadurch gekennzeichnet, dass** die Zwischenschicht eine Dicke von zwischen 6,0 und 9,0 nm aufweist.

2. Lithographisches Projektionsgerät gemäß Anspruch 1, wobei die Zwischenschichtdicke zwischen 6,5 und 8,5 nm, besser zwischen 7,0 und 8,0 nm liegt.

3. Lithographisches Projektionsgerät gemäß Anspruch 1, wobei die Zwischenschicht aus Mo mit einer Dicke von zwischen 6,8 und 8,5 nm, besser zwischen 7,2 und 8,0 nm, besteht.

4. Lithographisches Projektionsgerät gemäß Anspruch 1, wobei die Zwischenschicht aus C mit einer Dicke von zwischen 6,5 und 8,2 nm, besser zwischen 7,0 und 7,8 nm, besteht.

5. Lithographisches Projektionsgerät gemäß einem der vorhergehenden Ansprüche, wobei die Deckschicht aus Ru besteht und eine Dicke von zwischen 1,0 und 3,0 nm, vorzugsweise zwischen 1,6 und 3,0 nm, besser mindestens 2,0 nm oder 2,2 nm, aufweist.

6. Ein lithographisches Projektionsgerät, das Folgendes beinhaltet:
ein Strahlungssystem zum Bereitstellen eines Projektionsstrahls aus Strahlung;
eine Stützstruktur zum Stützen eines Musteraufbringungsmittels, wobei das Musteraufbringungsmittel dazu dient, den Projektionsstrahl gemäß einem gewünschten Muster zu mustern;
einen Substrattisch zum Halten eines Substrats;
ein Projektionssystem zum Projizieren des gemusterten Strahls auf einen Zielabschnitt des Substrats und
mindestens ein optisches Element, auf das der Projektionsstrahl einfällt, mit einer Si/Mo-Mehrfachschichtstruktur, einer äußeren Deckschicht aus Ru und einer Zwischenschicht, die zwischen der Mehrfachschichtstruktur und der äußeren Deckschicht positioniert ist, wobei die Zwischenschicht eine innere Zwischenschicht aus Mo neben der Mehrfachschichtstruktur und eine äußere Zwischenschicht aus C neben der Deckschicht beinhaltet,
**dadurch gekennzeichnet, dass** die äußere Zwischenschicht aus C eine Dicke von über 3,7 nm aufweist oder die Deckschicht eine Dicke über 2,2 nm aufweist.

7. Lithographisches Projektionsgerät gemäß Anspruch 6, wobei die kombinierte Dicke der Mo- und C-Schichten zwischen 6,0 und 9,0 nm beträgt.

8. Lithographisches Gerät gemäß Anspruch 6 oder 7, wobei die Schicht aus C eine Dicke von unter 3,8 nm aufweist.

9. Lithographisches Projektionsgerät gemäß einem der Ansprüche 6 bis 8, wobei die Schicht aus Mo eine Dicke von zwischen 3,0 und 4,0 nm, vorzugsweise unter 3,75 nm aufweist.

10. Ein Verfahren zum Herstellen einer Vorrichtung, das die folgenden Schritte beinhaltet:
Bereitstellen eines Substrats, das mindestens teilweise mit einer Schicht aus strahlungsempfindlichem Material überzogen ist;
Bereitstellen eines Projektionsstrahls aus Strahlung unter Verwendung eines Strahlungssystems;
Verwenden eines Musteraufbringungsmittels, um den Projektionsstrahl in seinem Querschnitt mit einem Muster zu versehen;
Projizieren des gemusterten Strahls aus Strahlung auf einen Zielabschnitt der Schicht aus strahlungsempfindlichem Material unter Verwendung mindestens eines optischen Elements, auf das der Projektionsstrahl einfällt, wobei das mindestens eine optische Element eine Si/Mo-Mehrfachschichtstruktur, eine äußere Deckschicht und eine aus C oder Mo bestehende Zwischenschicht, die zwischen der Mehrfachschichtstruktur und der äußeren Deckschicht positioniert ist, aufweist,
**dadurch gekennzeichnet, dass** die Zwischenschicht eine Dicke von zwischen 6,0 und 9,0 nm aufweist.

11. Ein Verfahren zum Herstellen einer Vorrichtung, das die folgenden Schritte beinhaltet:
Bereitstellen eines Substrats, das mindestens teilweise mit einer Schicht aus strahlungsempfindlichem Material überzogen ist;
Bereitstellen eines Projektionsstrahls aus Strahlung unter Verwendung eines Strahlungssystems;
Verwenden eines Musteraufbringungsmittels, um den Projektionsstrahl in seinem Querschnitt mit einem Muster zu versehen;
Projizieren des gemusterten Strahls aus Strahlung auf einen Zielabschnitt der Schicht aus strahlungsempfindlichem Material unter Verwendung mindestens eines optischen Elements, auf das der Projektionsstrahl einfällt, wobei das mindestens eine optische Element eine Si/Mo-Mehrfachschichtstruktur, eine äußere Deckschicht aus Ru und eine Zwischenschicht, die zwischen der Mehrfachschichtstruktur und der äußeren Deckschicht positioniert ist, aufweist,
wobei die Zwischenschicht eine innere Zwischenschicht aus Mo neben der Mehrfachschichtstruktur und eine äußere Zwischenschicht aus C neben der Deckschicht beinhaltet,
**dadurch gekennzeichnet, dass** die äußere Zwischenschicht aus C eine Dicke von über 3,7 nm aufweist oder die Deckschicht eine Dicke über 2,2 nm aufweist.

## Revendications

1. Un appareil de projection lithographique comprenant :
- un système de rayonnement destiné à fournir un faisceau de projection de rayonnement ;
- une structure formant support destinée à servir de support à un moyen pour conformer selon un motif, le moyen pour conformer selon un motif servant à conformer le faisceau de projection selon un motif souhaité ;
- une table porte-substrat destinée à porter un substrat ;
- un système de projection destiné à projeter le faisceau à motif sur une portion cible du substrat ; et
au moins un élément optique, sur lequel est incident ledit faisceau de projection, ayant une structure multicouche Si / Mo, une couche de revêtement externe et une couche intermédiaire composée de C ou Mo positionnée entre ladite structure multicouche et ladite couche de revêtement externe,
**caractérisé en ce que** ladite couche intermédiaire a une épaisseur d'entre 6,0 et 9,0 nm.

2. Un appareil de projection lithographique selon la revendication 1, dans lequel ladite épaisseur de couche intermédiaire est comprise entre 6,5 et 8,5 nm, plus préférablement entre 7,0 et 8,0 nm.

3. Un appareil de projection lithographique selon la revendication 1, dans lequel ladite couche intermédiaire est composée de Mo présentant une épaisseur d'entre 6,8 et 8,5 nm, plus préférablement d'entre 7,2 et 8,0 nm.

4. Un appareil de projection lithographique selon la revendication 1, dans lequel ladite couche intermédiaire est composée de C présentant une épaisseur d'entre 6,5 et 8,2 nm, plus préférablement d'entre 7,0 et 7,8 nm.

5. Un appareil de projection lithographique selon l'une quelconque des revendications précédentes, dans lequel ladite couche de revêtement est composée de Ru et a une épaisseur d'entre 1,0 et 3,0 nm, de préférence d'entre 1,6 et 3,0 nm, plus préférablement d'au moins 2,0 nm ou 2,2 nm.

6. Un appareil de projection lithographique comprenant :
un système de rayonnement destiné à fournir un faisceau de projection de rayonnement ;
une structure formant support destinée à servir de support à un moyen pour conformer selon un motif, le moyen pour conformer selon un motif servant à conformer le faisceau de projection selon un motif souhaité ;
une table porte-substrat destinée à porter un substrat ;
un système de projection destiné à projeter le faisceau à motif sur une portion cible du substrat ; et
au moins un élément optique, sur lequel est incident ledit faisceau de projection, ayant une structure multicouche Si / Mo, une couche de revêtement externe en Ru et une couche intermédiaire positionnée entre ladite structure multicouche et ladite couche de revêtement externe, dans lequel ladite couche intermédiaire comprend une couche intermédiaire interne en Mo à côté de ladite structure multicouche et une couche intermédiaire externe en C à côté de ladite couche de revêtement,
**caractérisé en ce que** ladite couche intermédiaire externe en C a une épaisseur de plus de 3,7 nm ou ladite couche de revêtement a une épaisseur supérieure à 2,2 nm.

7. Un appareil de projection lithographique selon la revendication 6, dans lequel l'épaisseur combinée desdites couches de Mo et de C est comprise entre 6,0 et 9,0 nm.

8. Un appareil lithographique selon la revendication 6 ou la revendication 7, dans lequel ladite couche de C a une épaisseur de moins de 3,8 nm.

9. Un appareil de projection lithographique selon l'une quelconque des revendications 6 à 8, dans lequel ladite couche de Mo a une épaisseur d'entre 3,0 et 4,0 nm, de préférence inférieure à 3,75 nm.

10. Un procédé de fabrication de dispositif comprenant les étapes de :
fournir un substrat qui est au moins partiellement recouvert d'une couche de matériau sensible au rayonnement ;
fournir un faisceau de projection de rayonnement à l'aide d'un système de rayonnement ;
utiliser un moyen pour conformer selon un motif afin de doter le faisceau de projection d'un motif dans sa coupe transversale ;
projeter le faisceau de rayonnement à motif sur une portion cible de la couche de matériau sensible au rayonnement à l'aide d'au moins un élément optique sur lequel est incident ledit faisceau de projection, ledit au moins un élément optique ayant une structure multicouche Si / Mo, une couche de revêtement externe et une couche intermédiaire composée de C ou de Mo positionnée entre ladite structure multicouche et ladite couche de revêtement externe,
**caractérisé en ce que** ladite couche intermédiaire a une épaisseur d'entre 6,0 et 9,0 nm.

11. Un procédé de fabrication de dispositif comprenant les étapes de :
fournir un substrat qui est au moins partiellement recouvert d'une couche de matériau sensible au rayonnement ;
fournir un faisceau de projection de rayonnement à l'aide d'un système de rayonnement ;
utiliser un moyen pour conformer selon un motif afin de doter le faisceau de projection d'un motif dans sa coupe transversale ;
projeter le faisceau de rayonnement à motif sur une portion cible de la couche de matériau sensible au rayonnement à l'aide d'au moins un élément optique sur lequel est incident ledit faisceau de projection, ledit au moins un élément optique ayant une structure multicouche Si / Mo, une couche de revêtement externe en Ru et une couche intermédiaire positionnée entre ladite structure multicouche et ladite couche de revêtement externe,
dans lequel ladite couche intermédiaire comprend une couche intermédiaire interne en Mo à côté de ladite structure multicouche et une couche intermédiaire externe en C à côté de ladite couche de revêtement,
**caractérisé en ce que** ladite couche intermédiaire externe en C a une épaisseur de plus de 3,7 nm ou ladite couche de revêtement a une épaisseur supérieure à 2,2 nm.
